# EUROPÄISCHE PATENTANMELDUNG

(11) **EP 4 474 702 A1**
(43) Veröffentlichungstag der Anmeldung: **11.12.2024**
(21) Anmeldenummer: 24174990.2
(22) Anmeldetag: 08.05.2024
(51) Int. Cl.: F22B 1/28, A47J 27/04

(54) **HEIZVORRICHTUNG ZUM ERHITZEN UND VERDAMPFEN VON WASSER UND WASSERFÜHRENDES HAUSHALTSGERÄT MIT EINER SOLCHEN HEIZVORRICHTUNG**

(30) Priorität: 17.05.2023 DE 102023113067
(71) Anmelder: E.G.O. Elektro-Gerätebau GmbH, 75038 Oberderdingen (DE)
(72) Erfinder: Schmieder, Manuel, 75038 Oberderdingen (DE)
(74) Vertreter: Patentanwälte Ruff, Wilhelm, Beier, Dauster & Partner mbB

(57) **Zusammenfassung**

Eine Heizvorrichtung zum Verdampfen von Wasser weist ein längliches vertikales Gehäuse auf mit einem Dampfauslass oben und einem Wassereinlass unten sowie einem unteren Teil-Heizbereich und einem Teil-Heizbereich in der Mitte und oben. Im Inneren des Gehäuses verläuft eine Rohrleitung mit einem kleineren Querschnitt entlang des Gehäuses, die mit einer Öffnung jeweils vor dem unteren Ende und dem oberen Ende des Gehäuses endet. Eine Abtrennung im unteren Drittel des Gehäuses und um die Rohrleitung herum trennt es in einen oberen Abschnitt und in einen unteren Abschnitt, wobei ein Teil der Beheizung unterhalb der Abtrennung angeordnet ist. Die Abtrennung ist wasserdurchlässig mit einem Durchlassquerschnitt für diese Wasserdurchlässigkeit, die maximal 10% der Querschnittsfläche des Gehäuses beträgt. Oben aus der Rohrleitung austretendes Wasser kann an der Innenseite des Gehäuses herablaufen und das Gehäuse dort kühlen, wo es beheizt wird, aber kein Wasser ist, um die Wärme abzunehmen.

## Beschreibung

### ANWENDUNGSGEBIET UND STAND DER TECHNIK

Die Erfindung betrifft eine Heizvorrichtung, mit der Wasser erhitzt und verdampft werden soll. Derartige Heizvorrichtungen sind auch als Dampfgeneratoren bekannt und werden beispielsweise in Dampfgarern oder Backöfen mit Dampfgarfunktion verwendet. Ebenso betrifft die Erfindung ein wasserführendes Haushaltsgerät mit einer solchen Heizvorrichtung, insbesondere einen Dampfgarer.

Eine entsprechende Heizvorrichtung für Wasser ist aus der DE 102015218120 A1 bekannt. Sie weist ein aufrechtstehendes Rohr auf, an dessen Außenseite in drei verschiedenen Höhenbereichen Heizleiter als Teil-Heizbereiche angebracht sind.

Eine weitere entsprechende Heizvorrichtung ist aus der DE 102017216599 A1 bekannt zur Dampferzeugung. Sie weist mittig an einem oberen Deckel eines Gehäuses einen rohrartigen Bereich auf, in dem ein Zyklon-Abscheider angeordnet ist. Mit diesem sollen Wassertröpfchen aus dem erzeugten und abgeleiteten Dampf ausgeschieden werden.

### AUFGABE UND LÖSUNG

Der Erfindung liegt die Aufgabe zugrunde, eine eingangs genannte Heizvorrichtung sowie ein damit versehenes Haushaltsgerät zu schaffen, mit denen Probleme des Standes der Technik gelöst werden können und es insbesondere möglich ist, Wasser schnell und einfach zu erhitzen bzw. zu verdampfen und insbesondere die gesamte Heizvorrichtung sowie das Haushaltsgerät betriebssicher und vorzugsweise sicher gegen allgemeine oder lokale Überhitzung auszugestalten.

Gelöst wird diese Aufgabe durch eine Heizvorrichtung mit den Merkmalen des Anspruchs 1 sowie durch ein wasserführendes Haushaltsgerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Heizvorrichtung oder nur für das Haushaltsgerät beschrieben. Sie sollen jedoch unabhängig davon sowohl für eine Heizvorrichtung als auch für ein damit versehenes Haushaltsgerät selbstständig und unabhängig voneinander gelten können. Der Wortlaut der Ansprüche wird durch ausdrückliche Bezugnahme zum Inhalt der Beschreibung gemacht.

Die Heizvorrichtung weist ein längliches Gehäuse mit einer Erstreckung in aufrechter und/oder in vertikaler Richtung auf. Der Querschnitt des Gehäuses ist dabei klein im Vergleich zu seiner aufrechten oder vertikalen Erstreckung bzw. ein Durchmesser oder der größte Durchmesser des Gehäuses beträgt zwischen 5% und 35%, insbesondere zwischen 7% und 20%, der vertikalen Höhe des Gehäuses. Somit kann das Gehäuse vorteilhaft als schlank oder dünn angesehen werden. Ein Winkel des Gehäuses bzw. seiner Längsachse zur Vertikalen sollte maximal 10° betragen, vorteilhaft sind Gehäuse bzw. Längsachse vertikal ausgerichtet nach Einbau in das entsprechende Gerät bzw. wasserführende Haushaltsgerät. Am oberen Endbereich des Gehäuses ist ein Dampfauslass angeordnet, an dem erzeugter Dampf ausgelassen wird, vorteilhaft in einen Dampfgarraum des Haushaltsgeräts. Ein Wassereinlass, der in das Gehäuse hineinführt ist vorgesehen, beispielsweise unterhalb der halben Höhe des Gehäuses, wobei andere Möglichkeiten nachfolgend noch erläutert werden. Der Wassereinlass kann mit einem Zulauf, einer Wasserleitung oder einem Wassertank, verbunden sein, wie dies aus dem eingangs genannten Stand der Technik bekannt ist. Des Weiteren ist eine Beheizung im unteren Bereich des Gehäuses und eine Beheizung im mittleren Bereich des Gehäuses vorgesehen, wobei diese Bereiche vorteilhaft in vertikaler Richtung gesehen werden. Die beiden beheizten Bereiche können voneinander getrennt sein, sie können aber auch durchgängig entlang des vertikalen Verlaufs des Gehäuses vorgesehen sein.

Erfindungsgemäß ist im Inneren des Gehäuses eine Rohrleitung angeordnet mit einem Querschnitt bzw. einem Durchmesser, der kleiner als der Innenquerschnitt bzw. Innendurchmesser des Gehäuses, insbesondere 5% bis 25% dessen beträgt. Die Rohrleitung verläuft entlang einer Längsrichtung des Gehäuses ist und kürzer als das Gehäuses, wobei sie vorzugsweise mittig im Gehäuse bzw. konzentrisch angeordnet ist. Diese Rohrleitung endet vor dem unteren Ende des Gehäuses bzw. reicht nicht bis zum unteren Ende des Gehäuses, wobei sie mindestens eine untere Einlassöffnung aufweist, vorzugsweise an ihrem unteren Ende. Die Rohrleitung kann auch bis zum unteren Ende des Gehäuses reichen, dann muss die Einlassöffnung aber in das Gehäuse offen sein. Des Weiteren endet die Rohrleitung vor dem oberen Ende des Gehäuses bzw. reicht nicht bis zum oberen Ende des Gehäuses. Dort weist sie mindestens eine obere Auslassöffnung auf, wobei auch hier die Rohrleitung unter Umständen zwar bis zum oberen Ende des Gehäuses verlaufen kann, dann aber darunter die genannte obere Auslassöffnung aufweist. Vorzugsweise ist die Rohrleitung zwischen Einlassöffnung und Auslassöffnung geschlossen.

Die obere Auslassöffnung ist mindestens so hoch angeordnet wie ein oberster Bereich der Beheizung, vorteilhaft überragt sie einen obersten Bereich einer Beheizung am Gehäuse, vorzugsweise um mindestens 0,5 cm bis 3 cm. Dies dient dazu, dass aus der Rohrleitung austretendes Wasser innen am Gehäuse herabläuft und so das Gehäuse im obersten Bereich der Beheizung kühlen kann, wenn der Wasserstand im Gehäuse niedriger sein sollte. Des Weiteren ist im unteren Bereich des Gehäuses eine Abtrennung angeordnet, die das Gehäuse bzw. dessen Innenraum in einen oberen Abschnitt und in einen unteren Abschnitt unterteilt bzw. trennt, wobei die Rohrleitung durch die Abtrennung hindurch verläuft. Diese Abtrennung ist wasserdurchlässig, wobei ein Durchlassquerschnitt für diese Wasserdurchlässigkeit zwischen 1% und 25%, vorteilhaft maximal 10%, der Querschnittsfläche bzw. der Innenquerschnittsfläche des Gehäuses beträgt. Hierzu wird nachfolgend noch mehr ausgeführt. Ein Bereich oder Abschnitt der Beheizung ist dabei unterhalb der Abtrennung angeordnet, also entweder ein eigenständiger Bereich oder einfach nur ein Abschnitt einer durchgängigen Beheizung. Die Rohrleitung sollte mit ihrem unteren Ende bzw. der Einlassöffnung auf alle Fälle unterhalb eines Wasserstands oder Wasserspiegels von Wasser in dem Gehäuse reichen, vorzugsweise liegt sie nicht unterhalb eines unteren Ende der gesamten Beheizung des Gehäuses. So ist es möglich, dass erhitztes Wasser in der Rohrleitung aufsteigt und oben an der Auslassöffnung austritt. Dabei kann es derart austreten, dass es an die Innenseite des Gehäuses gelangt und daran herunterläuft, wenn der Wasserstand nicht derart hoch reicht. Durch das herunterlaufende Wasser werden die Innenseite und somit auch das Gehäuse gekühlt. Wenn das Gehäuse in diesem Bereich durch die Beheizung beheizt wird, kann also durch diese Kühlung eine zu hohe Temperatur mit daraus resultierenden Schäden für die gesamte Heizvorrichtung vermieden werden. So ist es durch das Vorsehen der Rohrleitung möglich, insbesondere bei zu niedrigem Wasserstand in dem Gehäuse dennoch eine Beschädigung oder sogar einen Ausfall der Heizvorrichtung durch zu hohe Temperaturen zu vermeiden. An sich kann eine solche Rohrleitung wie ein sogenanntes Steigrohr funktionieren, wie es beispielsweise früher bei Kaffeemaschinen eingesetzt worden ist.

In Ausgestaltung der Erfindung kann die Beheizung zwei Teil-Heizbereiche aufweisen, entweder genau zwei Teil-Heizbereiche oder mehr Teil-Heizbereiche. Ein erster Teil-Heizbereich ist im unteren Bereich des Gehäuses unterhalb der Abtrennung angeordnet, wobei dies vorzugsweise der unterste Teil-Heizbereich ist bzw. keine Beheizung darunter erfolgt. Ein zweiter Teil-Heizbereich ist im mittleren Bereich und im oberen Bereich des Gehäuses angeordnet, wobei er oberhalb der Abtrennung angeordnet ist, insbesondere vollständig oberhalb der Abtrennung. Vorzugsweise ist dies der oberste Teil-Heizbereich bzw. es erfolgt keine Beheizung darüber.

In weiterer Ausgestaltung der Erfindung kann ein Abstand der beiden Teil-Heizbereiche bzw. des untersten Teil-Heizbereichs und des obersten Teil-Heizbereichs entlang der Längsrichtung des Gehäuses zueinander mindestens 1 cm bis 5 cm betragen. Dabei ist vorzugsweise in einem um das Gehäuse umlaufenden Bereich zwischen diesen beiden Teil-Heizbereichen keine Beheizung vorgesehen.

Allgemein können die Teil-Heizbereiche vorteilhaft unabhängig voneinander und auch gemeinsam angesteuert werden zum Aufheizen. So kann abhängig von einem Wasserstand möglichst gut beheizt werden und gleichzeitig keine Energie unnötig verschwendet werden sowie mögliche Überhitzung vermieden werden. Die Dampferzeugung kann auch besser gesteuert werden.

In Weiterbildung der Erfindung kann der Wassereinlass oberhalb der Abtrennung und/oder oberhalb der Einlassöffnung in die Rohrleitung angeordnet sein. So kann sichergestellt werden, dass bei einem Wasserstand bis zum Wassereinlass das Wasser auf alle Fälle die Abtrennung und/oder die Einlassöffnung erreicht hat bzw. das Wasser bis dort steht.

In nochmaliger Weiterbildung der Erfindung kann der Wassereinlass oberhalb des unteren Teil-Heizbereichs angeordnet sein. So kann sichergestellt werden, dass der untere Teil-Heizbereich stets von Wasser bedeckt ist. Des Weiteren kann der Wassereinlass unterhalb des oberen Teil-Heizbereichs angeordnet sein.

In Ausgestaltung der Erfindung kann die Rohrleitung mittig und konzentrisch in dem Gehäuse verlaufen, wobei sie vorzugsweise kreisrundzylindrischen Querschnitt aufweisen kann. Dabei kann das Gehäuse ebenfalls kreisrundzylindrischen Querschnitt aufweisen. So kann der Abstand zwischen Rohrleitung und Gehäuse stets gleich sein.

In weiterer Ausgestaltung der Erfindung kann die Rohrleitung an der Abtrennung beginnen bzw. mit ihrer Einlassöffnung an dieser Abtrennung verbunden sein. So kann erreicht werden, dass viel Wasser nach Erhitzen von unten bzw. aus dem Bereich des unteren Teil-Heizbereichs in die Rohrleitung geht und nur möglichst wenig daran vorbei, insbesondere möglichst viel Wasser in die Rohrleitung geht.

Vorteilhaft kann die Abtrennung eine Membran, ein Lochgitter, oder ein Schlitzgitter mit mehreren flächig verteilten Öffnungen sein, wobei diese Öffnungen in der Summe den Durchlassquerschnitt für den Durchgang von Wasser von oben nach unten bilden. Der Durchlassquerschnitt beträgt vorteilhaft weniger als 25% der Querschnittsfläche des Gehäuses, besonders vorteilhaft weniger als 10% der Querschnittsfläche, aber mehr als 2% bis 5%. So kann Wasser im Gehäuse durch den Durchlassquerschnitt stets von oben nach unten unter die Abtrennung gelangen, damit dort genügend Wasser ist bzw. dieser Bereich unterhalb der Abtrennung gefüllt ist.

Alternativ dazu kann die Abtrennung eine flächig in sich geschlossene Abtrennung sein, die also in ihrer Fläche keine Öffnungen aufweist. Dafür weist sie aber einen schlitzförmigen oder streifenförmigen Zwischenraum als Abstand zu einer Innenseite des Gehäuses und/oder zu der Rohrleitung auf, vorzugsweise mittels abstehender Abstandshalter, um einen fixen Abstand bzw. Zwischenraum zu gewährleisten. Dieser Abstand bzw. Zwischenraum kann vorteilhaft überall gleich sein.

In weiterer Ausgestaltung der Erfindung kann die Beheizung als Dickschichtheizung auf eine Außenseite des Gehäuses aufgebracht sein, alternativ als separat gefertigte Heizleiter, insbesondere metallische Heizleiter. Dabei kann die Beheizung mindestens 70%, insbesondere mindestens 80%, des Umfangs des Gehäuses bedecken. So ist ein möglichst großflächiges und gleichmäßiges Aufheizen des Wassers im Gehäuse möglich.

In nochmals weiterer Ausgestaltung der Erfindung kann an der Auslassöffnung der Rohrleitung oben eine Düsenvorrichtung angeordnet sein, die aufsteigendes Wasser zumindest teilweise zur Seite hin zu einer Innenseite des Gehäuses umlenken kann. Dies kann insbesondere eine Prallteller-Düse odgl. sein, sodass das Wasser aus der Rohrleitung zu einem möglichst großen Teil und/oder möglichst direkt an die Innenseite des Gehäuses gelangt. So kann eine möglichst gute und umfassende bzw. vollständige Kühlung durch innen herablaufendes Wasser erfolgen, wenn der Wasserstand nicht über die gesamte Höhe des oberen Teil-Heizbereichs reicht. Wenn nämlich nicht über die gesamte Höhe des oberen Teil-Heizbereichs bzw. der Beheizung Wasser im Gehäuse vorhanden ist, so steigt die Temperatur im über den Wasserstand reichenden Bereich stark an, möglicherweise zu stark. Dann droht eine Beschädigung der Heizvorrichtung, die vermieden werden sollte.

In Weiterbildung der Erfindung kann auf vertikaler Höhe der Auslassöffnung oder der vorgenannten Düsenvorrichtung eine Verteileinrichtung an der Innenseite des Gehäuses angeordnet sein. Diese Verteileinrichtung ist dazu ausgebildet, bereichsweise von der Auslassöffnung auf die Innenseite auftreffendes Wasser flächig in Umfangsrichtung entlang der Innenseite zu verteilen. Dabei kann die Verteileinrichtung seitlich abstehen, um Wasser aufzunehmen, und es zu verteilen, und Öffnungen zur Innenseite hin aufweisen, um das Wasser auszulassen.

Vorteilhaft kann das Gehäuse aus Kunststoff bestehen, und die Rohrleitung einstückig und einteilig darin angeformt sein. So ist eine Herstellung einfach möglich. Bei dem vorgenannten Vorteil durch eine Kühlung des Gehäuses im beheizten Bereich, in dem sich kein Wasser befindet, kann auch Kunststoff verwendet werden. Weitere Sicherheitsmaßnahmen können dadurch erreicht werden, dass Temperatursensoren, insbesondere diskrete Temperatursensoren, am Gehäuse angeordnet sind. Alternativ dazu kann allgemein auf jegliche Temperatursensoren an der Heizvorrichtung verzichtet werden.

In Weiterbildung der Erfindung kann der Wassereinlass mit einem Rückschlagventil oder mit einem Kugelventil zum Absperren versehen sein. So kann ein Wasserstand oberhalb des Wassereinlasses erreicht werden, ohne dass stets Wasserdruck angelegt sein muss.

In Ausgestaltung der Erfindung kann der Wassereinlass nach unterschiedlichen Möglichkeiten ausgebildet sein. Gemäß einer ersten Möglichkeit kann er unterhalb der halben Höhe des Gehäuses in das Gehäuse hineinführen, vorzugsweise auf 20% bis 30% der vertikalen Höhe des Gehäuses. Gemäß einer zweiten Möglichkeit kann er unterhalb der Beheizung, die im mittleren Bereich des Gehäuses vorgesehen ist, in das Gehäuse hineinführen. So wird vermieden, dass das über den Wassereinlass zugeführte Wasser, dass in der Regel kalt ist, dass durch die Beheizung aufzuhalten Wasser wieder direkt abkühlt. Gemäß einer dritten Möglichkeit kann der Wassereinlass oberhalb der Abtrennung in das Gehäuse hineinführen. Dies ist vorteilhaft zwischen einer mittleren Beheizung und einer unteren Beheizung, sodass das unterhalb der Abtrennung befindliche, bereits aufgewärmte Wasser, das dann unterhalb der Abtrennung in die Rohrleitung eintreten soll, direkt abgekühlt wird.

Ein erfindungsgemäßes wasserführendes Haushaltsgerät, welches insbesondere ein Dampfgarer sein kann, weist eine zuvor genannte Heizvorrichtung auf. Das längliche Gehäuse ist aufrecht bzw. in vertikaler Richtung in dem Haushaltsgerät angeordnet, vorteilhaft mit einem Winkel von maximal 10° zur Vertikalen. Besonders vorteilhaft ist das Gehäuse vertikal angeordnet, so verteilt sich an der Innenseite das herablaufende Wasser besonders gleichmäßig bzw. vollflächig.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine schematische Rückansicht eines erfindungsgemäßen Dampfgarers als wasserführendes Haushaltsgerät mit einer Heizvorrichtung,
- Fig. 2: eine erfindungsgemäße Heizvorrichtung als Dampferzeuger in Schnittdarstellung,
- Fig. 3: eine Abwandlung einer Heizvorrichtung ähnlich Fig. 2 und
- Fig. 4: eine Abwandlung der Ausgestaltung der Abtrennung in umgekehrter Trichterform.

### DETAILLIERTE BESCHREIBUNG DER AUSFÜHRUNGSBEISPIELE

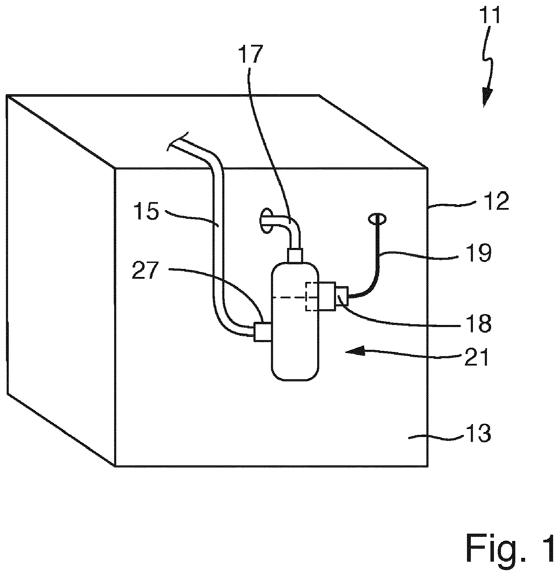

In der Fig. 1 ist ein erfindungsgemäßer Dampfgarer 11 als wasserführendes Haushaltsgerät in Rückansicht sehr vereinfacht dargestellt, insbesondere ohne vorteilhaft noch vorgesehene Abdeckung bzw. Außengehäuse, wie an sich aus dem Stand der Technik bekannt. Der Dampfgarer 11 weist ein Gehäuse 12 auf, in dessen Inneren eine hier nicht dargestellte, aber aus dem Stand der Technik bekannte Ofenmuffel als Zubereitungsraum angeordnet ist. An einer Rückseite 13 des Dampfgarers 11 ist eine erfindungsgemäße Heizvorrichtung zur Dampferzeugung angeordnet. Sie kann vorteilhaft noch durch eine Abdeckung darüber abgedeckt sein und so vor Beschädigung geschützt sein. Die Heizvorrichtung 21 weist als Anschluss seitlich einen Wasserschlauch 15 auf. Oben aus der Heizvorrichtung 21 geht eine Dampfleitung 17 heraus, die in den genannten Zubereitungsraum hineinführt. Um die Heizvorrichtung 21 herum, oder zumindest zum Gehäuse 12 des Dampfgarers 11 hin, ist vorteilhaft eine Wärmedämmung vorgesehen. Elektrisch angeschlossen wird die Heizvorrichtung 21 mittels eines Steckers 18 samt Anschlusskabel 19, vorteilhaft an eine Steuerung und/oder Leistungsversorgung. Dies wird nachfolgend noch erläutert.

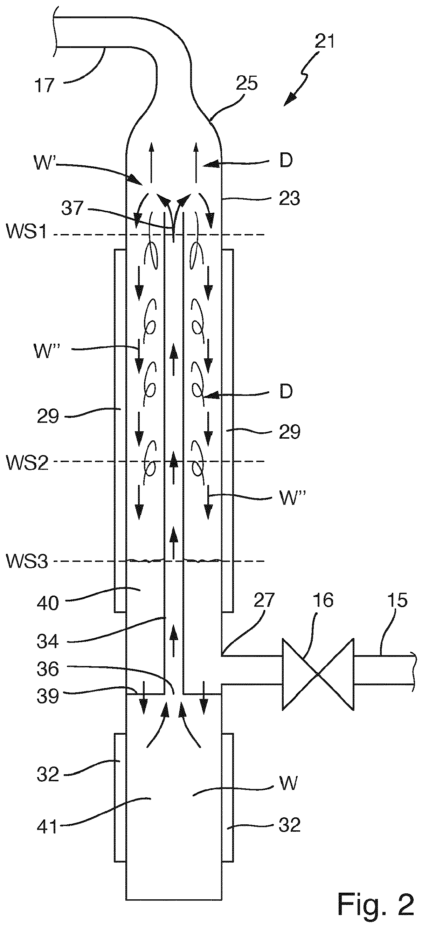

In der Fig. 2 ist eine erfindungsgemäße Heizvorrichtung 21 als Dampferzeuger im vergrößerten Schnitt dargestellt. Die Heizvorrichtung 21 weist ein Gehäuse 23 auf, das ein längliches rundzylindrisches Rohr ist und dessen Durchmesser etwa 10% der vertikalen Höhe beträgt. Diese Heizvorrichtung 21 ist gemäß der Fig. 1 vertikal angeordnet. Das Gehäuse 23 weist oben einen Dampfauslass 25 auf, der mit der Dampfleitung 17 verbunden ist. Unten weist das Gehäuse 23 auf etwa 30% seiner vertikalen Höhe einen Wassereinlass 27 für Frischwasser auf, der mittels eines ansteuerbaren Ventils 16 mit dem Wasserschlauch 15 für die Versorgung mit Frischwasser verbunden ist. Der Wassereinlass 27 könnte auch tiefer oder sogar am unteren Ende des Gehäuses 23 angeordnet sein. Er ist hier erkennbar unterhalb einer oberen Beheizung und oberhalb einer Abtrennung 39 angeordnet.

Außen an dem Gehäuse 23 der Heizvorrichtung 21 ist eine Beheizung vorgesehen mit einem oberen Teil-Heizbereich 29 und einem unteren Teil-Heizbereich 32. Der obere Teil-Heizbereich 29 ist etwa halb so hoch wie das gesamte Gehäuse 23 und endet ein Stück unterhalb des Dampfauslasses 25. Er beginnt etwas oberhalb des Wassereinlasses 27. Der untere Teil-Heizbereich 32 beginnt ein Stück unterhalb des Wassereinlasses 27 und reicht bis kurz vor das untere Ende des Gehäuses 23. Der obere Teil-Heizbereich 29 ist auch mehr als doppelt so lang wie der untere Teil-Heizbereich 32, somit kann der obere Teil-Heizbereich 29 auch eine mehr als doppelt so hohe Gesamt-Heizleistung aufweisen wie der untere Teil-Heizbereich 32.

Innerhalb des Gehäuses 23 und konzentrisch dazu ist eine Rohrleitung 34 vorgesehen, die auf hier nicht dargestellte Art und Weise fest in dem Gehäuse 23 gehalten ist. Der Durchmesser der Rohrleitung 34 beträgt hier etwa 20% des Durchmessers des Gehäuses 23. Beispielsweise kann sie bei Herstellung aus Kunststoff angespritzt sein. Die Rohrleitung 34 ist vorteilhaft auch rundzylindrisch ausgebildet und weist eine untere Einlassöffnung 36 auf, die knapp unterhalb des Wassereinlasses 27 liegt. Eine obere Auslassöffnung 37 der Rohrleitung 34 ist etwas oberhalb des oberen Teil-Heizbereichs 29 angeordnet, aber noch deutlich unterhalb des Dampfauslasses 25. Somit weist die Rohrleitung 34 etwas weniger als 2/3 der Gesamtlänge des Gehäuses 23 auf. Die untere Einlassöffnung 36 liegt ein Stück oberhalb des oberen Endes des unteren Teil-Heizbereichs 32. Am unteren Ende der Rohrleitung 34, vorteilhaft direkt an der unteren Einlassöffnung 36, ist eine Abtrennung 39 vorgesehen, die auch knapp unterhalb des Wassereinlasses 27 liegt. Diese Abtrennung 39 umgibt die Rohrleitung 34 bzw. die untere Einlassöffnung 36 vollständig und reicht umlaufend bis an die Innenseite des Gehäuses 23. Die Abtrennung 39 ist hier als eine Membran ausgebildet, die also eine Vielzahl kleiner bzw. sehr kleiner Öffnungen aufweist, die wasserdurchlässig sind. Ihre Summe ist die gesamte Wasserdurchlässigkeit, welche als gesamte Durchlassquerschnitt für die Wasserdurchlässigkeit etwa 5% bis 10% der Querschnittsfläche des Gehäuses 23 betragen kann. Eine Größe der Öffnungen der Membran kann im Bereich bis zu 50 µm oder bis zu 20 µm liegen. Die Abtrennung 39 bewirkt also, dass durch den Wassereinlass 27 eintretendes Wasser W nach unten in den Bereich unterhalb der Abtrennung 39, der einen unteren Abschnitt 41 im Gehäuse 23 bildet, gelangen kann. Somit sollte dieser untere Abschnitt 41, auch weil er unterhalb des Wassereinlasses 27 liegt, stets mit Wasser gefüllt sein. So kann erreicht werden, dass im Bereich des unteren Teil-Heizbereichs 32 stets Wasser W vorhanden ist.

Allerdings sollte auch Wasser W oberhalb der Abtrennung 39 und somit im oberen Abschnitt 40 vorhanden sein. Dies kann mit variierenden Wasserständen WS vorliegen. Dies wird nachfolgend noch näher erläutert.

Zum Erhitzen des Wassers W und Verdampfen als Dampf D kann beispielsweise ein hoher Wasserstand WS1 vorliegen, der etwas oberhalb des oberen Teil-Heizbereichs 29 und knapp unterhalb der oberen Auslassöffnung 37 liegt. Dann werden die beiden Teil-Heizbereiche 29 und 32 betrieben bzw. sie beheizen das Wasser W im Gehäuse 23, Dampf D entsteht und tritt zum Dampfauslass 25 aus. Bei diesem Wasserstand ist ein Betrieb völlig problemlos, insbesondere auch des oberen Teil-Heizbereichs 29. Der komplette Bereich des oberen Teil-Heizbereichs 29 wird vom Wasser W gekühlt.

Liegt ein niedrigerer Wasserstand vor, beispielsweise der Wasserstand WS2 knapp unterhalb der halben Höhe des oberen Teil-Heizbereichs 29, so wird immer noch Dampf D durch Erhitzen des Wassers W mittels der beiden Teil-Heizbereiche 29 und 32 erzeugt. Allerdings besteht nun das Problem, dass eben die obere Hälfte des oberen Teil-Heizbereichs 29 oberhalb des Wasserstands WS2 liegt und somit eigentlich seine Wärme nicht mehr an Wasser an der Innenseite des Gehäuses 23 abgeben kann. Deswegen könnte in diesem Bereich des oberen Teil-Heizbereichs 29 eine zu hohe Temperatur entstehen, welche zu einer Beschädigung der Heizvorrichtung 21 führen könnte. Dies gilt insbesondere für den Fall, dass das Gehäuse 23 aus Kunststoff besteht. Aber auch bei einem metallischen Gehäuse 23 könnten Probleme entstehen, beispielsweise auch an Heizleitern des oberen Teil-Heizbereichs 29 selbst. Dies wird erfindungsgemäß dadurch gelöst, dass der untere Teil-Heizbereich 32 das im unteren Abschnitt 41 befindliche Wasser W erhitzt. Zwar kann eine geringe Menge auch durch die Abtrennung 39 nach oben hindurchtreten, der weitaus größere Teil wird aber, wie durch die Pfeile dargestellt ist, an der unteren Einlassöffnung 36 in die Rohrleitung 34 eintreten und dort aufsteigen. Dies entspricht einem eingangs genannten Steigrohr bzw. Perkolatorrohr. Das unten erhitzte Wasser steigt also in der Rohrleitung 34 bis zur oberen Auslassöffnung 37 auf und tritt dort als austretendes Wasser W' aus. Dabei kann es, weil es kocht oder kurz vor dem Kochen ist, sozusagen mit Druck austreten oder herausspritzen, so dass es radial nach außen gegen die Innenseite des Gehäuses 23 im obersten Bereich spritzt. An dieser Innenseite läuft es dann als herunterlaufendes Wasser W" herab, vorteilhaft entlang der gesamten Innenseite in Umfangsrichtung gesehen. Es läuft herunter bis zum jeweiligen Wasserstand, welcher hier der vorgenannte Wasserstand WS2 ist, so dass sich an der Innenseite des Gehäuses 23 auch oberhalb des Wasserstands WS2 Wasser im Bereich des oberen Teil-Heizbereichs 29 befindet. Dadurch kann dieser zum einen gekühlt und vor möglicher zu hoher Temperatur geschützt werden. Zum anderen kann diese freiliegende Fläche an der Innenseite des Gehäuses durch die Beheizung mittels des oberen Teil-Heizbereichs 29 auch noch genutzt werden, um noch mehr Dampf D zu erzeugen. Hauptsächlich angestrebt ist aber die Kühlfunktion für den über den Wasserstand WS2 nach oben hinausragenden Bereich des oberen Teil-Heizbereichs 29.

Sinkt der Wasserstand sogar noch niedriger bis zum unten eingezeichneten Wasserstand WS3 knapp oberhalb des unteren Endes des oberen Teil-Heizbereichs 29, so ist dieser kühlende Effekt sogar noch größer und noch wichtiger. Dann befindet sich nämlich der größte Anteil des oberen Teil-Heizbereichs 29 bzw. mindestens 80% desselben oberhalb des Wasserstands WS3, was zu einer signifikanten Gefahr einer Temperaturüberhöhung führen könnte. Durch das Vorsehen der Abtrennung 39 wird zum Einen erreicht, dass sich im unteren Abschnitt 41 nicht zu starke Wasserbewegungen aufgrund des Erhitzens des Wassers W durch den unteren Teil-Heizbereich 32 bilden. So kann vor allem auch erreicht werden, dass eine ausreichende Menge an erhitztem Wasser W an der unteren Einlassöffnung 36 in die Rohrleitung 34 eintritt und darin aufsteigt, wie zuvor beschrieben. Zum Anderen kann aufgrund der Wasserdurchlässigkeit der Abtrennung 39 stets ausreichend Wasser von oben bzw. vom oberen Abschnitt 40 in den unteren Abschnitt 41 gelangen, so dass dieser stets gefüllt ist. Hauptsächlich aber dient die Abtrennung 39 dazu, dass genügend Wasser in der Rohrleitung 34 aufsteigt.

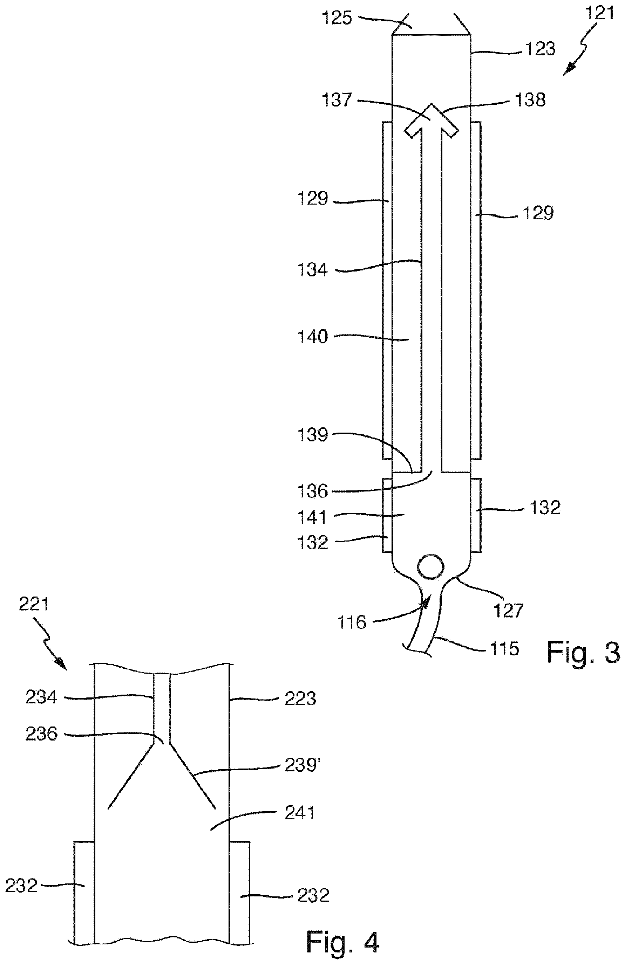

In der alternativen Ausgestaltung einer Heizvorrichtung 121 der Fig. 3 ist ein rohrartiges Gehäuse 123 ähnlich wie bei Fig. 2 vorgesehen, das oben einen Dampfauslass 125 aufweist. Ein Wassereinlass 127 ist hier am unteren Ende des Gehäuses 123 vorgesehen, wobei ein sogenanntes Ballventil oder Kugelventil 116 hin zu einem Wasserschlauch 115 zu dessen Absperren vorgesehen ist. Dieses Kugelventil 116 bildet eine Art Rückschlagventil, so dass auf keinen Fall Wasser austreten kann.

Am Gehäuse 123 ist ein oberer Teil-Heizbereich 129 vorgesehen, der knapp 3/4 der Höhe des gesamten Gehäuses 123 aufweist. Mit geringem axialen Abstand darunter ist ein unterer Teil-Heizbereich 132 vorgesehen.

Im Inneren des Gehäuses 123 ist wiederum eine Rohrleitung 134 angeordnet mit einer unteren Einlassöffnung 136, um die herum eine Abtrennung 139 entsprechend Fig. 2 angeordnet ist. Diese Abtrennung 139 trennt das Innere des Gehäuses 123 in einen oberen Abschnitt 140 und einen unteren Abschnitt 141. Die Abtrennung 139 kann entweder, wie zuvor zur Fig. 2 beschrieben, als Membran ausgebildet sein. Alternativ kann sie als Drahtsieb, Lochblech oder Schlitzblech ausgebildet sein mit entsprechendem Durchlassquerschnitt einer Wasserdurchlässigkeit. Da hier frisches Wasser von unten in den unteren Abschnitt 141 eintritt, ist eine Wasserdurchlässigkeit vor allem von unten nach oben notwendig, damit sich ein hier nicht eingezeichneter Wasserstand ergibt, der zumindest auf gleicher Höhe wie der obere Teil-Heizbereich 129 bzw. oberhalb der Abtrennung 139 liegt.

Die Rohrleitung 134 endet mit einer oberen Auslassöffnung 137 in etwa auf der obersten Höhe des oberen Teil-Heizbereichs 129. Dabei ist die obere Auslassöffnung 137 mit einer Verteildüse 138 versehen, die, wie zeichnerisch angedeutet ist, radial nach außen gerichtet ist. Somit kann austretendes Wasser ähnlich Fig. 2 aus der Rohrleitung 134 austreten, aber erheblich besser zielgerichtet nach außen gespritzt oder gesprüht werden, um möglichst vollständig und gleichzeitig gleichmäßig verteilt an die Innenseite des Gehäuses 123 zu gelangen. Dort soll das austretende und herunterlaufende Wasser wiederum, ähnlich wie zur Fig. 2 beschrieben, an der Innenseite denjenigen Teil des oberen Teil-Heizbereichs 129 kühlen, der oberhalb eines jeweiligen Wasserstandes liegt. Ansonsten könnte er, wie zuvor beschrieben worden ist, aufgrund zu geringer Wärmeabnahme überhitzen und eine Beschädigung an der Heizvorrichtung 121 bewirken.

In der Fig. 4 ist ein Ausschnitt einer weiteren erfindungsgemäßen Heizvorrichtung 221 dargestellt. Hier ist sozusagen die Rohrleitung 234 am Gehäuse 223 im unteren Bereich dargestellt mit einer unteren Einlassöffnung 236. Diese untere Einlassöffnung 236 ist aber nicht mit einer radial nach außen gerichteten Abtrennung 39 oder 139 gemäß der Fig. 2 oder 3 verbunden, die sozusagen eine über ihre Fläche verteilte Wasserdurchlässigkeit aufweisen. Eine hier vorgesehene Abtrennung 239` weist eine umgekehrte Trichterform auf oder kann eine Glockenform aufweisen, die einerseits quasi nahtlos und abgedichtet um die untere Einlassöffnung 236 herum an die Rohrleitung 234 verbunden ist. Andererseits reicht die Abtrennung 239` nicht vollständig bis an die Innenseite des Gehäuses 223, vielmehr ist ein geringer Abstand gegeben. Dieser Abstand kann 1 mm bis 3 mm betragen bzw. 2% bis 10% des Durchmessers des Gehäuses 223. Der Abstand kann auch entweder umlaufend vorgesehen sein oder von Stegen durchbrochen sein, die die trichterförmige Abtrennung 239` mit der Innenseite des Gehäuses 223 verbinden, beispielsweise zur Halterung der Rohrleitung 234 und zur Gewährleistung eines gewünschten und gleichbleibenden Abstands. Auch durch diese Ausgestaltung der Abtrennung gemäß Fig. 4 kann das vorgenannte Ziel erreicht werden, dass im unteren Abschnitt 241 erhitztes Wasser hauptsächlich durch die untere Einlassöffnung 236 in die Rohrleitung 234 eintritt und nach oben gelangt. Ebenso kann Wasser durch den Abstand leicht von oben nach unten gelangen. Es ist hier auch deutlich zu erkennen, dass die Abtrennung 239` oberhalb des unteren Teil-Heizbereichs 232 angeordnet ist.

## Patentansprüche

1. Heizvorrichtung zum Erhitzen und Verdampfen von Wasser, wobei die Heizvorrichtung aufweist:
- ein längliches Gehäuse mit Erstreckung in aufrechter Richtung,
- einen Dampfauslass am oberen Endbereich des Gehäuses und einen Wassereinlass,
- eine Beheizung im unteren Bereich des Gehäuses und im mittleren Bereich des Gehäuses,
wobei der Querschnitt des Gehäuses klein ist im Vergleich zu seiner aufrechten oder vertikalen Erstreckung bzw. ein Durchmesser oder der größte Durchmesser des Gehäuses zwischen 5% und 35% der vertikalen Höhe des Gehäuses betragen, **dadurch gekennzeichnet, dass**
- im Inneren des Gehäuses eine Rohrleitung angeordnet ist mit einem Querschnitt kleiner als der Innenquerschnitt des Gehäuses, die entlang einer Längsrichtung des Gehäuses verläuft und kürzer ist, vorzugsweise mittig im Gehäuse angeordnet ist,
- die Rohrleitung vor dem unteren Ende des Gehäuses endet und eine untere Einlassöffnung aufweist, und vor dem oberen Ende des Gehäuses endet und eine obere Auslassöffnung aufweist, wobei vorzugsweise die Rohrleitung zwischen Einlassöffnung und Auslassöffnung geschlossen ist,
- die obere Auslassöffnung mindestens so hoch angeordnet ist wie ein oberster Bereich der Beheizung,
- im unteren Bereich des Gehäuses eine Abtrennung in einen oberen Abschnitt und in einen unteren Abschnitt angeordnet ist,
- die Abtrennung wasserdurchlässig ist und durch die Rohrleitung verläuft, wobei ein Durchlassquerschnitt für die Wasserdurchlässigkeit zwischen 1 % und 25% der Innenquerschnittsfläche des Gehäuses beträgt,
- ein Teil der Beheizung unterhalb der Abtrennung angeordnet ist.

2. Heizvorrichtung nach Anspruch 1, **dadurch gekennzeichnet, dass** die Beheizung zwei Teil-Heizbereiche aufweist, wobei ein erster Teil-Heizbereich im unteren Bereich des Gehäuses unterhalb der Abtrennung angeordnet ist und ein zweiter Teil-Heizbereich im mittleren Bereich und im oberen Bereich des Gehäuses angeordnet ist und oberhalb der Abtrennung angeordnet ist, wobei vorzugsweise ein Abstand der beiden Teil-Heizbereiche entlang der Längsrichtung des Gehäuses zueinander mindestens 1 cm bis 5 cm beträgt, wobei insbesondere in einem um das Gehäuse umlaufenden Bereich dazwischen keine Beheizung vorgesehen ist.

3. Heizvorrichtung nach Anspruch 1 oder 2, **dadurch gekennzeichnet, dass** der Wassereinlass oberhalb der Abtrennung und/oder oberhalb der Einlassöffnung in die Rohrleitung angeordnet ist.

4. Heizvorrichtung nach einem der vorhergehenden Ansprüche, **dadurch gekennzeichnet, dass** der Wassereinlass oberhalb des unteren Teil-Heizbereichs angeordnet ist, vorzugsweise unterhalb des oberen Teil-Heizbereichs angeordnet ist.

5. Heizvorrichtung nach einem der vorhergehenden Ansprüche, **dadurch gekennzeichnet, dass** die Rohrleitung mittig und konzentrisch in dem Gehäuse verläuft, wobei sie vorzugsweise kreisrundzylindrischen Querschnitt aufweist, wobei insbesondere das Gehäuse ebenfalls kreisrundzylindrischen Querschnitt aufweist.

6. Heizvorrichtung nach einem der vorhergehenden Ansprüche, **dadurch gekennzeichnet, dass** die Rohrleitung an der Abtrennung beginnt bzw. mit ihrer Einlassöffnung an die Abtrennung verbunden ist.

7. Heizvorrichtung nach einem der vorhergehenden Ansprüche, **dadurch gekennzeichnet, dass** die Abtrennung eine Membran, ein Lochgitter, oder ein Schlitzgitter ist mit flächig verteilten Öffnungen, die in der Summe den Durchlassquerschnitt der Abtrennung bilden.

8. Heizvorrichtung nach einem der Ansprüche 1 bis 6, **dadurch gekennzeichnet, dass** die Abtrennung eine flächig in sich geschlossene Abtrennung ist mit einem schlitzförmigen oder streifenförmigen Zwischenraum als Abstand zu einer Innenseite des Gehäuses und/oder zu der Rohrleitung, vorzugsweise mittels abstehender Abstandshalter.

9. Heizvorrichtung nach einem der vorhergehenden Ansprüche, **dadurch gekennzeichnet, dass** die Beheizung als Dickschichtheizung auf eine Außenseite des Gehäuses aufgebracht ist, wobei sie vorzugsweise mindestens 70%, insbesondere mindestens 80%, des Umfangs des Gehäuses bedeckt.

10. Heizvorrichtung nach einem der vorhergehenden Ansprüche, **dadurch gekennzeichnet, dass** an der oberen Auslassöffnung der Rohrleitung eine Düsenvorrichtung angeordnet ist, die aufsteigendes Wasser zumindest teilweise zur Seite hin zu einer Innenseite des Gehäuses umlenkt, insbesondere eine Prallteller-Düse odgl..

11. Heizvorrichtung nach einem der vorhergehenden Ansprüche, **dadurch gekennzeichnet, dass** auf vertikaler Höhe der Auslassöffnung oder der Düsenvorrichtung nach Anspruch 10 eine Verteileinrichtung an der Innenseite des Gehäuses angeordnet ist, die bereichsweise auf die Innenseite auftreffendes Wasser flächig in Umfangsrichtung entlang der Innenseite verteilt, wobei vorzugsweise die Verteileinrichtung seitlich absteht.

12. Heizvorrichtung nach einem der vorhergehenden Ansprüche, **dadurch gekennzeichnet, dass** das Gehäuse aus Kunststoff besteht und die Rohrleitung einstückig und einteilig darin angeformt ist.

13. Heizvorrichtung nach einem der vorhergehenden Ansprüche, **dadurch gekennzeichnet, dass** der Wassereinlass mit einem Rückschlagventil oder mit einem Kugelventil zum Absperren versehen ist.

14. Heizvorrichtung nach einem der vorhergehenden Ansprüche, **dadurch gekennzeichnet, dass** der Wassereinlass unterhalb der halben Höhe des Gehäuses in das Gehäuse hineinführt und/oder unterhalb der Beheizung im mittleren Bereich des Gehäuses in das Gehäuse hineinführt und/oder oberhalb der Abtrennung in das Gehäuse hineinführt, wobei vorzugsweise der Wassereinlass auf 20% bis 35% der vertikalen Höhe des Gehäuses in das Gehäuse hineinführt.

15. Wasserführendes Haushaltsgerät, insbesondere Dampfgarer, mit einer Heizvorrichtung nach einem der vorhergehenden Ansprüche, **dadurch gekennzeichnet, dass** das längliche Gehäuse aufrecht oder in vertikaler Richtung angeordnet ist, insbesondere mit einem Winkel von maximal 10° zur Vertikalen.
